## Europäisches Patentamt
## European Patent Office
## Office européen des brevets

(19)

(11) Veröffentlichungsnummer: **0 078 938**
**B1**

(12)

# EUROPÄISCHE PATENTSCHRIFT

(45) Veröffentlichungstag der Patentschrift:
**09.12.87**

(51) Int. Cl.⁴: **C 09 K 3/00**, C 09 K 7/00, C 04 B 24/30

(21) Anmeldenummer: **82109565.0**

(22) Anmeldetag: **15.10.82**

(54) **Verwendung von Säuregruppen enthaltenden thermostabilen, hydrophilen Kondensationsprodukten von Aldehyden und Ketonen als oberflächenaktive Mittel.**

(30) Priorität: **10.11.81 DE 3144673**

(43) Veröffentlichungstag der Anmeldung:
**18.05.83 Patentblatt 83/20**

(45) Bekanntmachung des Hinweises auf die Patenterteilung:
**09.12.87 Patentblatt 87/50**

(84) Benannte Vertragsstaaten:
**AT BE CH DE FR GB IT LI NL SE**

(56) Entgegenhaltungen:
**CH - A - 303 271
DE - A - 2 831 613
US - A - 2 641 591**

(73) Patentinhaber: **SKW Trostberg Aktiengesellschaft,
Dr.-Albert-Frank-Strasse 32 Postfach 1150/1160,
D-8223 Trostberg (DE)**

(72) Erfinder: **Aignesberger, Alois, Dr.,
Pienzenauerstrasse 16, D-8223 Trostberg (DE)**
Erfinder: **Plank, Johann, Dr., Hauptstrasse 9,
D-8424 Saal/Donau (DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung von Säuregruppen tragenden thermostabilen, hydrophilen Kondensationsprodukten von Aldehyden und Ketonen.

Die Kondensation von Ketonen mit Aldehyden ist seit langem bekannt. Sie führt in ihrer Endstufe zu wasserunlöslichen Harzen. Die Verwendung von Natriumsulfit als alkalischer Katalysator einerseits und als Säuregruppen einführender Stoff andererseits ermöglicht die Bildung wasserlöslicher Kondensationsprodukte, die sich zum Beispiel als Zusätze für anorganische Bindemittel zur Verbesserung ihrer Eigenschaften eignen.

So sind z. B. aus der DE-AS 2 341 923 gut wasserlösliche Kondensationsprodukte aus Cycloalkanonen und Formaldehyd unter Verwendung von Natriumsulfit als Säuregruppen einführender Stoff bekannt. Ein Nachteil dieser Kondensationsprodukte ist jedoch deren geringe thermische Stabilität. So entstehen z. B. beim Einengen einer Lösung der Cycloalkanon-Formaldehyd-Kondensationsprodukte selbst unter schonenden Bedingungen (ca. 50 °C) bereits weitgehend wasserunlösliche pulverförmige Verbindungen; auch andere sulfonsäuremodifizierte Formaldehyd-Kondensationsprodukte, beispielsweise auf Basis von Harnstoff, zersetzen sich bei Temperaturen um den Siedepunkt des Wassers. Diese Kondensationsprodukte können deshalb unter Bedingungen bei hohen Temperaturen, wie sie z. B. in der Erdöltechnik bei Tiefbohrungen auftreten, nicht eingesetzt werden.

Aus CH-A-303 371 sind Keton-Aldehyd-Kondensationsprodukte bekannt, die sulfoniert sind. Sie werden in der Ledergerbung verwendet. Weiterhin sind aus DE-A 2 831 613 Keton-Aldehyd-Kondensationsprodukte bekannt, bei deren Herstellung Salze in katalytischen Mengen zugesetzt wurden, die als Anion eine SO$_2$- oder CH$_3$OSO-Gruppe enthalten. Diese Produkte werden als Lackrohstoffe, Klebrohstoffe, Bindemittel für Druckfarben, Lösungen zum Imprägnieren von Textilien, für Tuschen und Tinten sowie als Konfektionierhilfe für Chemikalien wie z. B. Prillieren von Düngemitteln, erwähnt. Aus US-PS 2 641 591 sind Aceton-Formaldehyd-Kondensationsprodukte bekannt, die geeignet sind zur Textilbehandlung.

Weiterhin ist es aus DE-OS 2 524 199 und den Chemical Abstracts-Referaten 91; 145 079 W (SU 668 913) und 98; 220 863 X (SU 983 101) bekannt, nicht durch Säuregruppen modifizierte Keton-Formaldehyd-Harze als Betonzusatzmittel zu verwenden. Diese Harze dienen lediglich zur Erhöhung der Druck- und Säurefestigkeit, wobei man sie zusammen mit einem Härter dem Mörtel oder Beton zusetzt. Durch das Fehlen der Säuregruppen weisen diese Kondensationsprodukte grundlegende strukturelle Unterschiede auf gegenüber Säuregruppen tragenden thermostabilen hydrophilen Kondensationsprodukten. Die nicht durch Säuregruppen modifizierten Harze dienen durch Ausbildung eines festen Harzgefüges der Festigkeitsverbesserung. Sie weisen jedoch keine oberflächenaktive Wirkung wie die säuremodifizierten Harze auf und haben daher auch keine der daraus resultierenden Eigenschaften wie Dispergierung/Verflüssigung oder Retentions- bzw. Verdickungswirkung.

Aus der DE-OS 2 657 453 ist bekannt, wasserlösliche Keton-Formaldehyd-Sulfinumsetzungsprodukte für Farbstoffzubereitungen zu verwenden.

Aufgabe der Erfindung ist deshalb die Bereitstellung thermostabiler Produkte, die sich auch noch bei hohen Temperaturen, z. B. als Zusatzmittel zur Verbesserung der Eigenschaften wässriger Systeme eignen. Diese Aufgabe wird mit dem Gegenstand der vorliegenden Anmeldung gelöst.

Gegenstand der Erfindung ist die Verwendung von Säuregruppen tragenden thermostabilen, hydrophilen Kondensationsprodukten von

1. Aldehyden und
2. symmetrischen oder unsymmetrischen Ketonen mit acyclischen aliphatischen, araliphatischen und/oder aromatischen Resten, wobei aber mindestens ein Rest ein nichtaromatischer Rest ist,

als Dispergiermittel für anorganische Bindemittelsuspensionen und -lösungen, für wässrige Kaolin- oder Tonsuspensione und für Öl-Wasser-Kohle-Suspensionen, als Verdickungsmittel, Retentionsmittel und/oder Verflüssigungsmittel, insbesondere für wässrige Systeme.

Die erfindungsgemäss verwendeten Kondensationsprodukte besitzen überraschenderweise eine hohe Thermostabilität. Sie sind im allgemeinen bis zu Temperaturen von mindestens 300 °C stabil. Die Thermostabilität bleibt dabei auch in Gegenwart von Wasser erhalten.

Als Säuregruppen enthalten die erfindungsgemäss verwendeten Kondensationsprodukte vorzugsweise Carboxy-, Phosphono-, Sulfino- und insbesondere Sulfogruppen, wobei diese Gruppen auch über Stickstoff oder Sauerstoff, oder über -N-alkylen- oder -O-alkylen-Brücken gebunden sein können, und dann z. B. Sulfamido-, Sulfooxy-, Sulfoalkyloxy-, Sulfinoalkyloxy- oder auch Phosphonooxygruppen sind. Eine Alkylgruppe in diesen Resten besitzt vorzugsweise 1 bis 5 Kohlenstoffatome und ist insbesondere Methyl oder Ethyl. Die erfindungsgemäss verwendeten Kondensationsprodukte können auch zwei oder mehrere verschiedene Säuregruppen enthalten.

Der Rest R der Aldehyde R–CHO kann Wasserstoff, ein aromatischer oder nichtaromatischer (cyclischer oder acyclischer) carbo- oder heterocyclischer Rest oder auch araliphatischer Rest sein, in dem die Zahl der Kohlenstoffatome oder Kohlenstoff- und Heteroatome vorzugsweise 1 bis 10 ist. Aromatische Reste sind z. B. α- oder β-Naphthyl, Phenyl oder Furfuryl, araliphatische Reste z. B. Benzyl oder Phenäthyl, nichtaromatische Reste z. B. Cycloalkyl- und insbesondere Alkylreste, vorzugsweise mit 1 bis 6 Kohlenstoffatomen, wie z. B. Methyl, Äthyl, Propyl, Butyl. Die aliphatischen Reste können auch verzweigt oder ungesättigt sein, und sind dann z. B. Vinyl.

Die Aldehyde können auch durch einen oder mehrere Substituenten, die die Kondensationsreaktion nicht beeinträchtigen, substituiert sein, wie z.B. durch Amino-, Hydroxy-, Alkoxy- oder Alkoxycarbonylgruppen, und/oder auch durch die in den Kondensationsprodukten enthaltenen Säuregruppen. Es können auch Aldehyde mit mehr als einer Aldehydgruppe, z.B. Di- oder Trialdehyde, eingesetzt werden, die infolge ihrer erhöhten Reaktivität in einigen Fällen besonders zweckmässig sein können. Es können auch, z.B. bei den niederen gesättigten Aldehyden wie Formaldehyd oder Acetaldehyd, die polymeren Formen (z.B. Paraformaldehyd oder Paraldehyd) eingesetzt werden.

Beispiele für gesättigte aliphatische Aldehyde sind Formaldehyd (oder Paraformaldehyd), Acetaldehyd (oder Paraldehyd), Butyraldehyd; für substituierte gesättigte aliphatische Aldehyde 3-Methoxy-propionaldehyd, Acetaldol; für ungesättigte aliphatische Aldehyde Acrolein, Crotonaldehyd, Furfurol, 4-Methoxy-furfurol, Propargylaldehyd; für Dialdehyde Glyoxal, Glutardialdehyd. Besonders bevorzugt wird als Aldehyd Formaldehyd verwendet.

Für die erfindungsgemäss verwendeten Kondensationsprodukte eingesetzte Ketone sind symmetrische oder unsymmetrische Ketone mit acyclischen aliphatischen, araliphatischen und/oder aromatischen Kohlenwasserstoffresten, wobei aber mindestens ein Rest ein nichtaromatischer Rest ist. Vorzugsweise besitzen die Kohlenwasserstoffreste 1 bis 10 Kohlenstoffatome.

Acyclische aliphatische Reste sind geradkettige oder verzweigte, ungesättigte und vorzugsweise gesättigte Alkylreste, wie z.B. Methyl, Äthyl, Propyl, Butyl, Isobutyl, Nonyl. Araliphatische Reste sind z.B. Benzyl oder Phenäthyl, und aromatische Reste sind z.B. α- oder β-Naphthyl und insbesondere Phenyl.

Die Ketone können auch durch einen oder mehrere Substituenten, die die Kondensationsreaktion nicht beeinträchtigen, substituiert sein, wie z.B. durch Amino-, Hydroxy-, Alkoxy- oder Alkoxycarbonylgruppen, und/oder auch durch die in den Kondensationsprodukten enthaltenen Säuregruppen.

Beispiele für gesättigte acyclische Ketone sind Aceton, Methyl-äthyl-keton, Methyl-iso-butyl-keton; für substituierte gesättigte acyclische Ketone Methoxyaceton, Diacetonalkohol, Acetessigsäureäthylester; für ungesättigte aliphatische Ketone Methylvinyl-keton, Mesityloxid, Phoron; für araliphatische Ketone Acetophenon, 4-Methoxyacetophenon, 4-Acetylbenzolsulfonsäure; für Diketone Diacetyl, Acetylaceton, Benzoylaceton.

Die Aldehyde und Ketone sind in reiner Form, aber auch in Form von Verbindungen mit dem die Säuregruppen einführenden Stoff, z.B. als Aldehydsulfitaddukt oder als Hydroxymethansulfinsäuresalz, einsetzbar. Es können auch zwei oder mehrere verschiedene Aldehyde und/oder Ketone eingesetzt werden.

Die Gesamtzahl der Kohlenstoffatome oder gegebenenfalls Kohlenstoffatome und Heteroatome in den erfindungsgemäss eingesetzten Aldehyden und Ketonen wird so gewählt, dass der hydrophile Charakter der Kondensationsprodukte erhalten bleibt. Sie ist deshalb auch abhängig von der Zahl der Säuregruppen im Kondensationsprodukt, aber auch vom Verhältnis Keton/Aldehyd. Die bevorzugte Gesamtzahl beträgt für die Aldehyde 1 bis 11, für die Ketone 3 bis 12.

Das Molverhältnis von Ketonen/Aldehyden/Säuregruppen beträgt im allgemeinen 1/1 bis 6/0,02 bis 2, wobei aber je nach dem speziellen Verwendungszweck auch Abweichungen möglich sind.

Aufgrund ihrer Eigenschaften werden die Kondensationsprodukte erfindungsgemäss als Dispergiermittel für anorganische Bindemittelsuspensionen und -lösungen, für wässrige Kaolin- oder Tonsuspensionen und für Öl-Wasser-Kohle-Suspensionen, als Verdickungsmittel, Retentionsmittel, aber auch als Verflüssigungsmittel insbesondere für wässrige Systeme verwendet.

Die gewünschten Eigenschaften lassen sich dabei durch geeignete Wahl der Ausgangsverbindungen und der Molverhältnisse steuern. Als Beispiel für wässrige Systeme, in denen die Produkte erfindungsgemäss vorteilhaft eingesetzt werden, seien genannt: Anorganische Bindemittelsuspensionen und -lösungen, Dispergiermittel für Öl-in-Wasser-Emulsionen, wässrige Kaolin- oder Tonsuspensionen und Öl-Wasser-Kohle-Suspensionen. Infolge ihrer hohen Thermostabilität eignen sich die erfindungsgemässen Kondensationsprodukte insbesondere sehr gut als Zusatzmittel für anorganische Bindemittel. Die erfindungsgemässen Produkte sind so stabil, dass sie in der Zementmühle ohne Wirkungsverlust mit dem Klinker gemahlen werden können. Als Dispergiermittel sind sie beispielsweise zur Herstellung von Fliessbeton oder Fliessestrich geeignet, und infolge ihrer guten Thermostabilität insbesondere auch zur Verflüssigung von Tiefbohrzementmischungen, wofür aufgrund der auftretenden hohen Temperaturen eine hohe Temperaturbeständigkeit erforderlich ist. Als Retentionsmittel eignen sie sich zur Herstellung von Schlämmen aus hydraulischen Bindemitteln, welche gutes Wasserrückhaltevermögen aufweisen (z.B. bei Tiefbohrzementschlämmen oder bei Fliesenklebern), und als Verdickungsmittel eignen sie sich z.B. in der Erdöltechnik sehr gut zur Viskositätserhöhung wässriger Lösungen oder Suspensionen.

Vorzugsweise werden die Kondensationsprodukte in Form von Lösungen oder Dispersionen, insbesondere in Form wässriger Lösungen oder Dispersionen, verwendet. Der Feststoffgehalt dieser Zubereitungen beträgt im allgemeinen 10 bis 70, insbesondere 20 bis 50 Gew.-%.

Es können zwei oder mehrere der Kondensationsprodukte mit gleicher, ähnlicher und/oder auch verschiedener Wirksamkeit erfindungsgemäss verwendet werden, oder deren Gemische mit einem oder mehreren bekannten Zusatzmitteln mit gleicher, ähnlicher und/oder verschiedener Wirksamkeit, wie z.B. Gemische mit bekannten Dispergiermitteln, Tensiden oder Betonzusatzmitteln. Auf diese Weise lassen sich die Eigenschaften der Endprodukte oft noch zusätzlich verändern oder differenzieren.

Die vorherrschenden Eigenschaften der erfindungsgemäss verwendeten Kondensationsprodukte hängen insbesondere von der Art und dem Molverhältnis Aldehyde/Ketone/Säuregruppen einführende Verbindungen ab. Der hydrophile Charakter nimmt mit sinkendem Anteil der Säuregruppen ab, wobei in der Regel bei einem Wert 0,15 Mol eine vollständige Wasserlöslichkeit nicht mehr zu erzielen ist. Für Dispergiermittel und Verflüssiger eignen sich vorzugsweise Formaldehyde, Glyoxal und Aceton, und ein Verhältnis Keton/Aldehyd/Säuregruppen einführende Verbindungen von 1 bis 0,25 bis 2. Oberflächenaktive Stoffe werden vorzugsweise erhalten durch Umsetzung von Aldehyden und Ketonen mit längeren Alkylresten oder mit Aralkylresten, die mindestens mehr als 1 Kohlenstoffatom enthalten und einem Verhältnis Keton/Aldehyd/Säuregruppen einführende Verbindungen von 1/1 bis 6/0,05 bis 2. Retentions- und Verdickungsmittel ergeben sich aus Aldehyden und Ketonen mit Alkylresten, die bis zu 3 Kohlenstoffatome enthalten, und ein Molverhältnis Keton/Aldehyd/Säuregruppen einführende Verbindungen von 1/1 bis 6/0,2 bis 2 aufweisen. Durch eine Kombination der für die spezifischen Eigenschaften vorzugsweise angewandten Bedingungen, z.B. durch Kombination der für eine bestimmte Eigenschaft besonders geeignete Art der Ausgangsmaterialien mit dem für eine andere Art bevorzugten Molverhältnis können auch Mischeigenschaften erzielt werden.

Die erfindungsgemäss verwendeten Kondensationsprodukte können durch Umsetzung der Ketone, Aldehyde und Säuregruppen einführenden Verbindungen unter alkalischen pH-Wertbedingungen erhalten werden, wobei nach Art einer Eintopfreaktion vorgegangen werden kann. Als Ausführungsformen für die Herstellung der Kondensationsprodukte sind folgende Varianten möglich:

I. Vorlegen des Ketons und der Säuregruppen einführenden Verbindung und Zugabe des Aldehyds,

II. Vorlegen des Aldehyds und der Säuregruppen einführenden Verbindung und Zugabe des Ketons,

III. Vorlegen des Ketons und Zugabe eines Gemisches aus Aldehyd und Säuregruppen einführender Verbindung oder (z.B. im Falle von Sulfit) einer Verbindung des Aldehyds mit der Säuregruppen einführenden Verbindung,

IV. Vorlegen des Aldehyds und Zugabe eines Gemisches aus Keton und Säuregruppen einführender Verbindung oder einer Verbindung des Ketons mit der Säuregruppen einführenden Verbindung und

V. Gleichzeitiges Vorlegen von Aldehyd, Keton und Säuregruppen einführender Verbindung.

Bei den Varianten I bis V kann jeweils anstelle des Ketons auch ein Keton-Aldehyd-Kondensationsprodukt eingesetzt werden, welches ganz oder teilweise die erforderliche Menge an Keton und/oder Aldehyd enthält.

Im allgemeinen ist die Verfahrensvariante I. bevorzugt; die Verfahrensvariante V. eignet sich insbesondere zur Umsetzung weniger reaktiver Komponenten.

Die Reaktion springt im allgemeinen bereits bei gelindem Erhitzen an und verläuft dann exotherm, so dass in der Regel gekühlt wird. Zur Erzielung eines gleichmässigen Produkts oder insbesondere beim Einsatz von weniger reaktionsfähigen Ausgangsprodukten ist eine Nacherhitzung zweckmässig, die bis zu mehreren Stunden dauern kann.

Die Umsetzung wird im allgemeinen bei einem pH-Wert von 8 bis 14 durchgeführt, vorzugsweise im Bereich von 11 bis 13. Die pH-Werteinstellung kann z.B. durch Zugabe von Hydroxiden von ein- oder zweiwertigen Kationen oder durch Vorlegen eines Säuregruppen einführenden Stoffs, wie z.B. von Natriumsulfit, erfolgen, welcher in wässriger Lösung unter alkalischer Reaktion hydrolysiert.

Die Umsetzung kann sowohl in homogener als auch in heterogener Phase durchgeführt werden. Als Reaktionsmedium wird in der Regel Wasser oder ein Gemisch mit Wasser verwendet, wobei der Anteil des Wassers vorzugsweise mindestens 50 Gew.-% beträgt. Als nichtwässrige Lösungsmittelzusätze komen insbesondere polare organische Lösungsmittel in Betracht wie z.B. Alkohole oder Säureester. Die Umsetzung kann sowohl im offenen Gefäss als auch im Autoklaven durchgeführt werden, wobei es zweckmässig sein kann, in einer Inertgasatmosphäre, z.B. unter Stickstoff, zu arbeiten.

Die Kondensationsprodukte können, wenn erwünscht, aus ihren nach der Umsetzung erhaltenen Lösungen oder Dispersionen z.B. durch Einengen am Rotationsverdampfer oder durch Sprühtrocknung isoliert werden. Die erhaltenen Lösungen oder Dispersionen können aber auch als solche direkt verwendet werden.

Als Aldehyd- und Keton-Ausgangsmaterialien werden die vorstehend genannten Aldehyde und Ketone eingesetzt, wobei auch Gemische von Ketonen und/oder Aldehyden eingesetzt werden können. Die Aldehyde und Ketone können sowohl in reiner Form als auch als Verbindung mit dem Säuregruppen einführenden Stoff (z.B. als Bisulfit-Additionsverbindung) zum Einsatz gelangen. Sie können sowohl in wässriger als auch in nichtwässriger, beispielsweise alkoholischer Lösung vorgelegt oder zugegeben werden.

Darüberhinaus kann einer Teilmenge des Ketons, die mit der Säuregruppen einführenden Verbindung gemischt oder bereits umgesetzt wurde, zunächst die Restmenge des Ketons sowie eine Teilmenge Aldehyd zugegeben und schliesslich mit der Restmenge des Aldehyds versetzt werden.

Dieses Herstellungsprinzip kann ebenso bei Vertauschen von Aldehyd und Keton angewandt werden. Es eignet sich insbesondere zur kontinuierlichen Gestaltung des Herstellungsverfahrens.

Die Umsetzung verläuft bei Aldehyden oder Ketonen mit niedriger Alkylkette besonders rasch und exotherm, während bei Verbindungen mit sterisch anspruchsvollen Substituenten wie z.B. Methyl-iso.-butyl-keton oder Benzylaceton, zur vollständigen Umsetzung eine lange thermische Nachbehandlung erforderlich ist.

Als Säuregruppen einführende Verbindungen können alle unter den Kondensationsbedingungen die Säuregruppen einführenden Verbindungen eingesetzt werden, wie z.B. die reinen Säuren, Salze der Säuren mit ein- bis dreiwertigen anorganischen oder organischen Kationen oder Additionsverbindungen, insbesondere Additionsverbindungen mit den erfindungsgemäss verwendeten Aldehyden und Ketonen. Beispiele dafür sind
Sulfite, Hydrogensulfite, Pyrosulfite,
Bisulfit-Additionsverbindungen von Aldehyden oder Ketonen,
Amidosulfonsäure-salze, Taurin-Salze,
Sulfanilsäure-Salze;

Hydroxymethansulfinsäure-Salze;
Aminoessigsäure-Salze; Phosphorigsäure-Salze.

Die erfindungsgemäss verwendeten Kondensationsprodukte besitzen neben den Säuregruppen einen Gehalt an Hydroxygruppen, Ketogruppen und gegebenenfalls Doppelbindungen. Dies ergibt sich eindeutig aus ihren IR-Spektren, die alle die für diese Gruppen charakteristischen Banden zeigen.

Die nachfolgenden Beispiele erläutern die Erfindung näher, ohne sie darauf zu beschränken. Wenn nicht anders angegeben, bedeuten Teile und Prozentangaben Gewichtsteile und Gewichtsprozente.

Die Tabelle I gibt einen Überblick über die in den Herstellungsbeispielen verwendeten Ausgangsprodukte und Darstellungsweisen.

Tabelle I

| Beispiel | Ausgangsstoffe | | Säuregruppen ein- führender Stoff | Molverhältnis Keton:Aldehyd: Säuregruppe | Darstel- lungsweise |
|---|---|---|---|---|---|
| | Keton | Aldehyd | | | |
| A. 1. | Aceton | Formaldehyd | Sulfit | 1:3:0,5 | Variante I |
| A. 2. | Aceton | Formaldehyd | Sulfit | 1:1,67:0,67 | Variante I |
| A. 3. | Aceton | Formaldehyd | Sulfit | 1:1:0,05 | Variante I |
| A. 4. | Aceton | Formaldehyd | Amidosulfonsäure | 1:3:0,5 | Variante I |
| A. 5. | Aceton | Formaldehyd | Aminoessigsäure | 1:3:1 | Variante I |
| A. 6. | Aceton | Formaldehyd | Oxymethansulfinsäure | 1:2:1 | Variante III |
| A. 7. | Aceton | Acetaldehyd | Sulfit | 1:2:0,5 | Variante I |
| A. 8. | – | Crotonaldehyd | Aceton-bisulfit-Addukt | 1:2:1 | Variante IV |
| A. 9. | Aceton | Crotonaldehyd/ Furfurol | Sulfit | 1:2:0,5 | Variante I |
| A.10. | Aceton | Glyoxal | Taurin | 1:1,5:0,5 | Variante I |
| A.11. | Methyl-ethyl- keton | Formaldehyd | Sulfit | 1:2:0,75 | Variante I |
| A.12. | Methyl-isobutyl- keton | Formaldehyd | Sulfit | 1:2:035 | Variante V |
| A.13. | Diacetonalkohol | Crotonaldehyd | Pyrosulfit | 1:6:0,5 | Variante I |
| A.14. | Mesityloxid | Formaldehyd | Sulfit | 1:4:1,3 | Variante I |
| A.15. | Acetophenon | Paraformaldehyd | Sulfit | 1:3:1 | Variante II |
| A.16. | 4-Acetyl-benzol- sulfonsäure | Crotonaldehyd | Sulfit | 1:2:0,5 | Variante I |
| A.17. | Acetylaceton | Acrolein | Sulfit | 1:3:2 | Variante I |
| A.18. | Aceton | Formaldehyd | Sulfit | 1:3:0,5 | Variante I |
| A.19. | Methylethylketon | Crotonaldehyd | Aminoessigsäure | 1:3:1 | Variante I |
| A.20. | Diacetonalkohol | Formaldehyd | Sulfit | 1:3:0,5 | Variante I |

A. Herstellung der Kondensationsprodukte
Beispiel A.1.

In einem offenen Reaktionsgefäss mit Rührwerk, Innenthermometer und Rückflusskühler legt man nacheinander 1000 Gew.-Teile Wasser, 630 Gew.-Teile Natriumsulfit sowie 580 Gew.-Teile Aceton vor und verrührt einige Minuten intensiv. Dabei löst sich ein beträchtlicher Teil des Sulfits und die Temperatur des Reaktionsgutes steigt auf 31 bis 32 °C an.

Man erwärmt den Ansatz auf 56 °C Innentemperatur (Aceton-Rückfluss) und tropft insgesamt 3000 Gew.-Teile 30%-ige Formaldehydlösung (Formalin) zum Reaktionsgut zu. Wegen der stark exothermen Reaktion verfährt man bei der Formalinzugabe so, dass man das erste Zehntel der Formaldehydlösung langsam und gleichmässig zugibt und dann das Anspringen der Reaktion abwartet, was sich durch beginnende Gelbfärbung der Vorlage und verstärkten Acetonrückfluss äussert.

Sobald die ersten Anzeichen einer Reaktion sichtbar sind, beginnt man mit der Kühlung. Die Umsetzung schreitet unter Rotfärbung der Vorlage und kräftigen Acetonrückfluss fort. Nachdem diese Anfangsphase abgeklungen ist, lässt man das restliche Formalin zufliessen und hält die Temperatur durch Kühlung bei 60 bis 70 °C. Ist das Eintropfen des Aldehyds beendet, heizt man auf 90 bis 95 °C auf und behandelt 1 Stunde bei dieser Temperatur.

Die abgekühlte Lösung des Kondensationsprodukts weist einen Feststoffgehalt von 34,5% und eine Viskosität von 25 cP (= mPas) bei 20 °C auf.

Das Produkt vermindert die Viskosität von wässrigen Dispersionen und ist z.B. für die Verflüssigung von Tiefbohrzementschlämmen geeignet.

Beispiel A.2.

Das Reaktionsgefäss von Beispiel A.1. wird mit 1260 Gew.-Teilen Natriumsulfit sowie 870 Gew.-Teilen Aceton beschickt und unter intensivem Rühren auf 56 °C Innentemperatur erwärmt.

Sobald diese Innentemperatur erreicht ist, beginnt man mit der Zugabe von insgesamt 2500 Gew.-Teilen 30%-iger Formaldehydlösung und leitet die exotherme Reaktion nach der in Beispiel A.1. beschriebenen Weise ein. Ist die Umsetzung in Gang gekommen, setzt man das restliche Formalin über ein Vorratsgefäss zu und lässt die Temperatur der Lösung während des letzten Drittels der Formaldehydzugabe auf 80 °C ansteigen. Dabei nimmt die tiefrote, anfangs leichtflüssige Lösung eine Viskosität von 3000 cP (80 °C) an. Nach Beendigung der Formaldehydzugabe erhitzt man noch 30 Minuten auf 90 °C und füllt das fertige Kondensationsprodukt zweckmässig in heissem Zustand ab.

Die Lösung des Kondensationsproduktes ist bei Raumtemperatur nicht giessfähig (Viskosität > 1000 P) und weist einen Feststoffgehalt von 56,0% auf. Eine wässrige Lösung des Kondensats reagiert stark alkalisch (pH = 13,5).

Das Produkt verleiht Zementmörteln sehr gutes Wasserrückhaltevermögen und eignet sich z.B. für Fliesenaufklebungen.

Beispiel A.3.

2000 Gew.-Teile Wasser, 63 Gew.-Teile Natriumsulfit und 580 Gew.-Teile Aceton werden im Reaktionsgefäss von Beispiel A.1. intensiv verrührt und auf 56 °C Innentemperatur erwärmt.

Sobald die geforderte Temperatur erreicht ist und das Aceton zu refluxieren beginnt, setzt man insgesamt 1000 Gew.-Teile 30%-iger Formaldehyd-Lösung (Formalin) zu, wobei man durch Zugabe von zunächst 100 Gew.-Teilen Formalin die exotherme Reaktion nach der im Beispiel A.1. beschriebenen Weise einleitet und durchführt. Nach Beendigung der Formaldehydzugabe erhitzt man die ziegelrote, stark schäumende Lösung noch 1 Stunde auf 90 bis 95 °C.

Die abgekühlte Lösung des Kondensationsprodukts weist einen Feststoffgehalt von 24,0% und eine Viskosität von 10 cP (20 °C) auf.

Das Produkt besitzt gute Tensidwirkung und ist z.B. zur Herstellung von Schaumbeton geeignet.

Beispiel A.4.

In der Apparatur nach Beispiel A.1. werden zunächst 970 Gew.-Teile Amidosulfonsäure in 6000 Gew.-Teilen Wasser gelöst und mit 370 Gew.-Teilen Calciumhydroxid neutralisiert. Die Lösung des Calciumsalzes der Amidosulfonsäure reagiert stark sauer und wird durch Zufügen von weiteren 100 Gew.-Teilen Calciumhydroxid alkalisch gestellt.

Zu dieser Vorlage des Säuregruppen einführenden Stoffs gibt man 1160 Gew.-Teile Aceton, erwärmt auf 56 °C und setzt nach der in Beispiel A.1. beschriebenen Verfahrensweise insgesamt 6000 Gew.-Teile 30%iger Formaldehydlösung zu. Anschliessend wird die orangerote Lösung, welche zum Teil noch überschüssiges Calciumhydroxid suspendiert enthält, 24 Stunden bei 90 °C kondensiert.

Die abgekühlte Lösung des Kondensationsprodukts weist bei einem Feststoffgehalt von 25% eine Viskosität von 15 cP (20 °C) auf und reagiert alkalisch.

Das Produkt ist als Dispergiermittel z.B. für hydraulische Bindemittel verwendbar.

Beispiel A.5.

Das Reaktionsgefäss von Beispiel A.1. wird in der angegebenen Reihenfolge mit 2000 Gew.-Teilen Wasser, 750 Gew.-Teilen Aminoessigsäure, 400 Gew.-Teilen Natriumhydroxid sowie 580 Gew.-Teilen Aceton beschickt und unter intensivem Rühren auf 56 °C Innentemperatur aufgeheizt.

Sobald die angegebene Temperatur erreicht ist, lässt man insgesamt 2430 Gew.-Teile 37%iger Formalinlösung, welche mit 0,01% Isophthalobisguanamin stabilisiert ist, nach der in Beispiel A.1. beschriebenen Art in die bei 60 bis 80 °C gehaltene Vorlage einfliessen und erhitzt 24 Stunden auf 90 bis 95 °C.

Die ziegelrote Lösung des Kondensationsprodukts zeigt grünliche Fluoreszenz und weist einen Feststoffgehalt von 38% auf. Ihre Viskosität bei 20 °C beträgt 25 cP.

Das Kondensat besitzt Dispergiereigenschaften und erniedrigt z.B. die Viskosität von Tiefbohrzementschlämmen.

Beispiel A.6.

Im offenen Reaktionsbehälter von Beispiel A.1. werden 1000 Gew.-Teile Wasser und 580 Gew.-Teile Aceton unter kräftigem Rühren auf 56 °C erwärmt und bei dieser Temperatur mit 38 Gew.-Teilen festen Natriumhydroxids auf einen pH-Wert von mindestens 13,0 eingestellt.

Anschliessend lässt man eine klare Lösung von 1180 Gew.-Teilen Natriumformaldehydsulfoxylat (Oxymethansulfinsäure-Natriumsalz), 1627 Gew.-Teilen 37%iger Formalinlösung (stabilisiert mit 10% Methanol) und 3000 Gew.-Teilen Wasser in die Vorlage nach Art von Beispiel A.1. einfliessen und führt die Umsetzung wie beschrieben durch. Nach dem Ende der Formaldehyd-Zugabe erhitzt man die tiefrote Lösung noch 5 Stunden auf 90 bis 95 °C.

Die leichtflüssige Lösung des Kondensationsprodukts weist einen Feststoffgehalt von 28% auf und reagiert stark alkalisch.

Das Kondensat besitzt Dispergier- und Tensideigenschaften.

Beispiel A.7.

5000 Gew.-Teile Wasser, 1260 Gew.-Teile Natriumsulfit und 1160 Gew.-Teile Aceton werden im Reaktionsgefäss von Beispiel A.1. kräftig verrührt und auf 56°C erwärmt.

In diese Vorlage lässt man nach Beispiel A.1. insgesamt 1760 Gew.-Teile reinen Acetaldehyds einfliessen und hält nach Beendigung der Aldehydzugabe noch 4 Stunden bei 90 bis 95°C.

Das orangebraune Kondensat besitzt einen Feststoffgehalt von 40% und weist eine Viskosität von 450 cP bei 20°C auf.

Das Kondensationsprodukt zeigt Oberflächenaktivität und erniedrigt z.B. die Oberflächenspannung wässriger Lösungen stark.

Beispiel A.8.

Zunächst werden 537 Gew.-Teile Aceton-Natriumbisulfit-Addukt in 1000 Gew.-Teile Wasser eingerührt und die farblose, klare Lösung mit 160 Gew.-Teilen festen Natriumhydroxids auf pH = 13 eingestellt.

Anschliessend beschickt man das Reaktionsgefäss von Beispiel A.1. mit 1000 Gew.-Teilen Wasser und 464 Gew.-Teilen Crotonaldehyd, erwärmt auf 60°C und tropft nach der in A.1. beschriebenen Art die oben bereitete alkalische Lösung des Aceton-Bisulfit-Addukts zu. Im Anschluss an die Zugabe wird der Ansatz noch 3 Stunden bei 90 bis 95°C gehalten.

Die rotbraune, leichtflüssige Lösung des Kondensationsprodukts weist einen Feststoffgehalt von 30% auf und reagiert stark alkalisch.

Das Produkt zeigt oberflächenaktive Eigenschaften und ist z.B. für die Herstellung von Schaumbeton geeignet.

Beispiel A.9.

Im Reaktionsgefäss von Beispiel A.1. werden nacheinander 6000 Gew.-Teile Wasser, 630 Gew.-Teile Natriumsulfit sowie 580 Gew.-Teile Aceton vorgelegt und unter kräftigem Rühren auf 56°C erwärmt.

Hat das Reaktionsgut diese Temperatur erreicht, lässt man ein Gemisch von insgesamt 960 Gew.-Teilen Furfurol und 700 Gew.-Teilen Crotonaldehyd in die Vorlage einfliessen, wobei man nach der in Beispiel A.1. beschriebenen Weise vorgeht. Nach Beendigung der Zugabe wird 4 Stunden bei 90 bis 95°C nachbehandelt.

Die tiefrote Lösung des Kondensationsprodukts weist 27% Feststoffgehalt und eine Viskosität von 180 cP bei 20°C auf.

Das Kondensat ist als Dispergiermittel mit oberflächenaktiven Eigenschaften geeignet.

Beispiel A.10.

Man beschickt das Reaktionsgefäss von Beispiel A.1. nacheinander mit 2000 Gew.-Teilen Wasser, 625 Gew.-Teilen Taurin, 200 Gew.-Teilen festen Natriumhydroxids sowie 580 Gew.-Teilen Aceton und erwärmt das Reaktionsgut auf 56°C (Acetonrückfluss).

Sobald diese Innentemperatur erreicht ist, beginnt man mit der Zugabe von insgesamt 2900 Gew.-Teilen 30%-iger Glyoxallösung und führt die unter starker Wärmeentwicklung ablaufende Umsetzung nach der in Beispiel A.1. beschriebenen Weise durch. Nach Beendigung der Glyoxalzugabe erhitzt man 2 Stunden auf 90 bis 95°C.

Die tiefrote, leichtflüssige Lösung weist einen Feststoffgehalt von 35% auf und reagiert schwach alkalisch.

Das Kondensationsprodukt stellt ein gutes Dispergiermittel dar.

Beispiel A.11.

In einem Druckbehälter aus V2A-Stahl mit Flügelrührwerk, Innenthermometer und Druckanzeiger werden 1500 Gew.-Teile Wasser, 1890 Gew.-Teile Natriumsulfit sowie 1440 Gew.-Teile Methyläthylketon vorgelegt und nach dem Verschliessen des Reaktionsgefässes intensiv verrührt.

Nun heizt man die Vorlage auf 70°C Innentemperatur und speist über eine Dosierpumpe mit Autoklavenzuleitung insgesamt 4000 Gew.-Teile 30%-igen Formaldehyd in das Druckgefäss ein, wobei die Temperatur des Reaktionsgutes auf höchstens 85°C ansteigen darf und ein maximaler Überdruck von 2 bar entsteht. Nach Beendigung der Formalinzugabe erhitzt man die Lösung noch 1 Stunde auf 90 bis 100°C.

Die orangerote, stark schäumende Lösung besitzt einen Feststoffgehalt von 48% und eine Viskosität von 1200 cP.

Das Kondensationsprodukt ist oberflächenaktiv und eignet sich z.B. als Luftporenbildner für Mörtel oder Beton.

Beispiel A.12.

Im Reaktionsgefäss nach Beispiel A.1. legt man nacheinander 1000 Gew.-Teile Wasser, 126 Gew.-Teile Natriumsulfit, 1000 Gew.-Teile Methyl- isobutyl-keton sowie 600 Gew.-Teile 30%-iger Formaldehydlösung vor und erwärmt das Zweiphasengemisch 8 Stunden auf 90°C. Die Reaktion läuft unter sichtbarer Abnahme der organischen Phase infolge Einkondensation des Methyl-iso-butylketons und Gelbfärbung der wässrigen Phase ab.

Nach beendeter Umsetzung trennt man die überstehende organische Schicht, welche aus ca. 70% des eingesetzten, nichtkondensierten Methyl-iso-butylketons besteht, von der wässrigen Phase ab. Das so erhaltene Keton kann für weitere Ansätze wiederverwendet werden.

Die wässrige, gelb gefärbte Lösung des Kondensationsprodukts weist einen Feststoffgehalt von 14% auf und reagiert stark alkalisch. Die Viskosität der Lösung beträgt 12 cP bei 20°C.

Das Produkt eignet sich aufgrund seiner oberflächenaktiven Eigenschaften z.B. zur Luftporeneinführung in Mörtel oder Beton.

Beispiel A.13.

Im Reaktionsbehälter von Beispiel A.1. werden nacheinander 6000 Gew.-Teile Wasser, 475 Gew.-Teile Natriumpyrosulfit sowie 580 Gew.-Teile Diacetonalkohol vorgelegt und auf 70 °C Innentemperatur erwärmt. Sobald die klare, farblose Lösung diese Temperatur erreicht hat, fügt man noch 257 Gew.-Teile festes Natriumhydroxid hinzu.

Zu dieser Vorlage lässt man nach der in Beispiel A.1. beschriebenen Art insgesamt 2100 Gew.-Teile Crotonaldehyd zufliessen und hält nach Beendigung der Aldehydzugabe 30 Minuten bei 90 °C.

Die tiefrote Lösung des Kondensationsprodukts weist einen Feststoffgehalt von 36% auf und reagiert stark alkalisch. Ihre Viskosität beträgt 150 cP bei 20 °C.

Das Produkt besitzt sehr gute Tensideigenschaften.

Beispiel A.14.

200 Gew.-Teile Wasser, 980 Gew.-Teile Mesityloxid sowie 1638 Gew.-Teile Natriumsulfit werden im Reaktionsgefäss von Beispiel A.1. intensiv verrührt und auf 90 °C erhitzt.

Zu der Suspension setzt man insgesamt 4000 Gew.-Teile 30%-iger Formaldehydlösung nach der Art von Beispiel A.1. zu und behandelt die dunkelrote, hochviskose Lösung noch 1 Stunde bei 90 bis 95 °C.

Man erhält ein bei Raumtemperatur nahezu festes, jedoch wasserlösliches Kondensationsprodukt, welches einen Feststoffgehalt von 50% aufweist und stark alkalisch reagiert (pH = 13,5).

Das Produkt erhöht die Viskosität wässriger Lösungen und eignet sich z.B. als Verdickungsmittel für Zementschlämmen.

Beispiel A.15.

Eine farblose Lösung von 900 Gew.-Teilen Paraformaldehyd und 1260 Gew.-Teilen Natriumsulfit in 3000 Gew.-Teilen Wasser wird im offenen Reaktionsgefäss von Beispiel A.1. bei 60 °C unter kräftigem Rühren mit insgesamt 1200 Gew.-Teilen Acetophenon langsam und gleichmässig versetzt, wobei die Temperatur des Reaktionsgutes 70 °C nicht überschreiten darf. Nach beendeter Ketonzugabe behandelt man die stark schäumende Lösung 2 Stunden bei 90 bis 95 °C.

Die gelb gefärbte, leichtflüssige Lösung weist einen Feststoffgehalt von 49% auf und reagiert stark alkalisch. Die Viskosität beträgt bei 20 °C 40 cP.

Das Kondensat besitzt oberflächenaktive Eigenschaften und eignet sich z.B. als Schäumerzusatz zur Gasbetonherstellung.

Beispiel A.16.

Eine 80 °C heisse Lösung von 555 Gew.-Teilen 4-Acetylbenzolsulfonsäure-natriumsalz und 158 Gew.-Teilen Natriumsulfit in 2000 Gew.-Teilen Wasser wird im Reaktionsgefäss von Beispiel A.1. mit 23 Gew.-Teilen festen Natriumhydroxids versetzt.

Zu dieser stark alkalisch reagierenden Vorlage lässt man nach der in Beispiel A.1. beschriebenen Art insgesamt 350 Gew.-Teile Crotonaldehyd im Temperaturbereich von 60 bis 70 °C zufliessen und hält den Ansatz 6 Stunden bei 95 °C.

Die tiefrote Lösung des Kondensationsprodukts weist einen Feststoffgehalt von 33% auf und reagiert stark alkalisch. Die Viskosität beträgt bei 20 °C 12 cP.

Das Produkt besitzt Tensideigenschaften und setzt die Oberflächenspannung wässriger Lösungen herab.

Beispiel A.17.

Ein kräftig gerührtes Gemisch aus 1000 Gew.-Teilen Acetylaceton, 2520 Gew.-Teilen Natriumsulfit und 7000 Gew.-Teilen Wasser wird im Reaktionsgefäss von Beispiel A.1. auf 60 °C Innentemperatur erwärmt und nach dem dort beschriebenen Verfahren mit insgesamt 1680 Gew.-Teilen Acrolein versetzt. Anschliessend führt man ein 4-stündiges Nacherhitzen des Ansatzes bei 90 bis 95 °C durch.

Das tiefrote Kondensat besitzt 40% Feststoffgehalt und zeigt eine Viskosität von 24 cP bei 20 °C.

Das Produkt bildet in wässriger Lösung stark Schaum und eignet sich z.B. als Schäumerzusatz zur Gasbetonherstellung.

Beispiel A.18.

In einem Rührbehälter mit aufgesetztem Vorratsgefäss und Kondensator werden 1000 Gew.-Teile 30%iger Formalin-Lösung und 580 Gew.-Teile Aceton mit 100 Gew.-Teilen Kaliumcarbonat intensiv verrührt, wobei die Temperatur des Ansatzes 55 °C nicht übersteigen darf.

Nach 12 h versetzt man das erhaltene Aceton-Formaldehyd-Kondensat mit 1700 Gew.-Teilen Wasser sowie 630 Gew.-Teilen Natriumsulfit, erwärmt auf 60 °C und fügt weitere 2000 Gew.-Teile 30%iger Formalin-Lösung zu, wobei die Temperatur des Reaktionsgutes auf 90 °C gesteigert wird. Anschliessend führt man ein einstündiges Nacherhitzen des Ansatzes bei 95 °C durch.

Die erhaltene Lösung des Kondensationsprodukts weist einen Feststoffgehalt von 30% auf und ist z.B. als Verflüssigerzusatz für wässrige β-Halbhydratgipsschlämmen geeignet.

Beispiel A.19.

Im Reaktionsgefäss von Beispiel A.18. werden 6400 Gew.-Teile Wasser, 1400 Gew.-Teile Crotonaldehyd sowie 720 Gew.-Teile Methylethylketon unter intensivem Rühren mit 100 Gew.-Teilen Kaliumcarbonat versetzt und 5 h bei einer Temperatur von 80–90 °C gehalten.

Anschliessend fügt man eine Lösung von 970 Gew.-Teilen des Natriumsalzes der Aminoessigsäure in 800 Gew.-Teilen Wasser zu, erwärmt auf 80 °C und gibt weitere 700 Gew.-Teile Crotonaldehyd zu, wobei die Temperatur des Ansatzes langsam auf 90 °C ansteigen soll. Bei dieser Temperatur führt man schliesslich eine zweistündige Nacherhitzung des Reaktionsgutes durch.

Die erhaltene Lösung des Kondensationsprodukts ist tiefrot gefärbt und weist einen Feststoffgehalt von 36% auf. Sie besitzt oberflächenaktive Eigenschaften.

Beispiel A.20.

1400 Gew.-Teile Wasser, 1400 Gew.-Teile 30%iger Formalin-Lösung sowie 1160 Gew.-Teile Diacetonalkohol werden nach Zusatz von 100 Gew.-Teilen Kaliumcarbonat im Reaktionsgefäss von Beispiel A.18., 8 Stunden bei 30°C intensiv verrührt.

Das gelb gefärbte Diacetonalkohol-Formaldehyd-Kondensat versetzt man mit 630 Gew.-Teilen Natriumsulfit, erwärmt den Ansatz auf 60°C und fügt weitere 1600 Gew.-Teile 30%iger Formalin-Lösung zu, wobei die Temperatur der Lösung 90°C erreichen soll. Im Verlauf der einstündigen Nacherhitzung bei 90°C steigt die Viskosität der Harzlösung beständig an, so dass 30 Minuten nach dem Ende des Formalineintrags weitere 1500 Gew.-Teile Wasser zugefügt werden müssen, um die Rührfähigkeit des Ansatzes zu erhalten.

Das tiefrot gefärbte Kondensationsprodukt weist einen Feststoffgehalt von 32% auf und erstarrt beim Abkühlen auf Raumtemperatur. Die Viskosität einer 10%igen Abdünnung dieser Lösung beträgt 55 cP.

Das Produkt wirkt als Retentionsmittel und verringert z.B. die Wasserabgabe von Tierbohrzementschlämmen an poröse Formationen.

B. Anwendungsbeispiele
Beispiel B.1.
Verflüssigung von Tiefbohrzementschlämmen

Ein nach den Beispielen A.1., A.5, A.10 oder A.18 hergestelltes Kondensationsprodukt erniedrigt die Viskosität von Tiefbohrzementschlämmen, welche nach den Standardbedingungen von API RP 10B hergestellt und mit dem Fann-Viskosimeter vermessen wurden.

Beispiel B.2.
Dispergierung von Portlandzement und β-Halbhydratgips

Die Dispergierwirkung erfindungsgemässer Kondensationsprodukte an Portlandzement der Klasse 45F sowie an β-Halbhydratgips ist in Tabelle II dargestellt.

Tabelle II
Steigerung der Ausbreitmasse wässriger Portlandzement- und β-Halbhydrat-Gips-Schlämmen bei Zusatz an Kondensationsprodukten

| Kondensationsprodukt aus | Herstellungsbeispiel | Steigerung des Ausbreitmasses von Portlandzementschlämmen[+] β-Halbhydratgipsschlämmen[++] | |
|---|---|---|---|
| Aceton/Formaldehyd/Sulfit | A. 1. | 58 % | 52 % |
| Aceton/Formaldehyd/Sulfit | A. 2. | 33 % | 40 % |
| Aceton/Formaldehyd/Aminoessigsäure | A. 5. | 49 % | 47 % |
| Aceton/Glyoxal/Taurin | A.10 | 54 % | 49 % |
| Methyläthylketon/Formaldehyd/Sulfit | A.11. | 42 % | 43 % |
| Aceton/Formaldehyd/Sulfit | A.18. | 53 % | 49 % |

[+]Dosierung an Kondensationsprodukt jeweils 0,2 Feststoffprozent, bezogen auf Zementgehalt
[++]Dosierung an Kondensationsprodukt in allen Fällen 0,8 Feststoffprozent, bezogen auf Gipsgehalt.

Beispiel B.3.

Verflüssigungswirkung temperaturbehandelter Kondensationsprodukte an Tiefbohrzement

Tabelle III beschreibt die Änderung des Ausbreitmasses einer wässrigen Tiefbohrzementschlämme bei Zusatz der wie folgt behandelten Kondensationsprodukte.

a) Lösung des Kondensationsprodukts gemäss Herstellungsbeispiel ohne zusätzliche Temperaturbehandlung.

b) 20%-ige wässrige Lösung des Kondensats, 5 Stunden bei den angegebenen Temperaturen autoklaviert.

c) Pulversubstanz des Kondensationsproduktes nach 15 Stunden Lagerung bei den angegebenen Temperaturen.

Tabelle III
Verflüssigungswirkung temperaturbehandelter Kondensationsprodukte an Tiefbohrzementschlämmen

| Kondensationsprodukt aus | Herstellungsbeispiel | Ausbreitmassänderung der Tiefbohrzementschlämme [+] | | | | |
|---|---|---|---|---|---|---|
| | | a) Kondensatlösung nach Herstellungsbeispiel | b) Kondensatlösung 5 h temperaturbehandelt bei | | c) Pulversubstanz; 15 h temperaturbehandelt bei | |
| | | | 105° C | 250° C | 105° C | 250° C |
| Aceton/Formaldehyd/Sulfit | A. 1. | + 43% | + 43% | + 42% | + 43% | + 43% |
| Aceton/Formaldehyd/ Aminoessigsäure | A. 5. | + 30% | + 30% | + 30% | + 30% | + 30% |
| Aceton/Glyoxal/Taurin | A.10. | + 41% | + 41% | + 40% | + 41% | + 41% |

[+]Herstellung der Schlämme gemäss API RP 10B aus Class G-Zement; Dosierung an Kondensationsprodukt jeweils 0,2 Feststoffprozent, bezogen auf Zementgehalt

Beispiel B.4.
Herstellung von Fliessbeton mit Zusatz von dispergierenden Kondensationsprodukten

Nach den Beispielen A.1., A.5., A.10. und A.18. hergestellte Kondensationsprodukte eignen sich zur Herstellung von Fliessbeton nach den Bestimmungen der «Richtlinien für die Herstellung und Verarbeitung von Fliessbeton» in der Fassung vom Mai 1974, wie sie z.B. in der Zeitschrift «Beton» 24 Seiten 342 bis 344 (1974) zitiert sind.

Beispiel B.5.
Oberflächenaktivität von Kondensationsprodukten

Aus pulverisierten Kondensationsprodukten, welche jeweils 15 Stunden bei 105 bzw. 200 °C gelagert waren, wurden 2%ige wässrige Lösungen angerührt und deren Oberflächenspannung tensiometrisch bestimmt. Die Messergebnisse sind in Tabelle IV zusammengestellt.

Tabelle IV
Oberflächenspannung 2%-iger wässeriger Lösung von temperaturbehandelten Kondensationsprodukten

| Kondensationsprodukt aus | Herstellungsbeispiel | Oberflächenspannung (dyn/cm) | |
|---|---|---|---|
| | | Pulver von 105° C | Pulver von 200° C |
| Aceton/Acetaldehyd/Sulfit | A. 7. | 36,2 | 36,4 |
| Methyläthylketon/Formaldehyd/Sulfit | A.11. | 38,0 | 38,0 |
| Methyl-isobutylketon/Formaldehyd/ Sulfit | A.12. | 33,0 | 33,0 |
| Diacetonalkohol/Crotonaldehyd/ Pyrosulfit | A.13. | 38,8 | 39,0 |
| Acetylaceton/Acrolein/Sulfit | A.17. | 41,2 | 41,1 |

Beispiel B.6.

Herstellung von Schaumbeton mit oberflächenaktiven Kondensationsprodukten

Die 1%-ige Lösung des festen Kondensats von Herstellungsbeispiel A.7. wurde mittels eines handelsüblichen Schaumaggregats zu einem Schaum der mittleren Dichte 0,1 g/cm³ verschäumt und in eine Mischung aus 300 kg Portlandzement 45 F, 600 kg Feinsand (Korngrösse 0 bis 1 mm) sowie 120 kg Wasser eingerührt. Der so erzeugte Schaumbeton weist eine Frischrohdichte von 0,99 g/cm³ auf.

Beispiel B.7.

Gasbetonverklebungen mit Mörtel oder Zementleim bei Zusatz von Retentionsmitteln

Nach den Beispielen A.2 und A.14 hergestellte Kondensationsprodukte können zur Bereitung von Mörteln oder Zementleim mit hohem Wasserrückhaltevermögen wie z.B. für Gasbetonverklebungen verwendet werden.

Der Gasbeton ist durch den Zementleim so fest verklebt; dass nach 24 Stunden kein Bruch in der Fuge mehr auftritt.

Das gleiche Ergebnis wird mit festen Kondensationsprodukten erzielt, welche 15 Stunden bei 200 °C temperaturbehandelt und anschliessend dem Zementleim als Retentionsmittel zugesetzt wurden.

Beispiel B.8.
Nach den Beispielen A.2., A.14. und A.20. hergestellte Kondensationsprodukte erhöhen die Viskosität wässriger Lösungen oder von wässrigen Suspensionen anorganischer Bindemittel wie z. B. Tiefbohr- und Portlandzement oder Gips.

**Patentansprüche**

1. Verwendung von Säuregruppen tragenden thermostabilen, hydrophilen Kondensationsprodukten von
1. Aldehyden und
2. symmetrischen oder unsymmetrischen Ketonen mit acyclischen aliphatischen, araliphatischen und/oder aromatischen Resten, wobei aber mindestens ein Rest ein nichtaromatischer Rest ist,
als Dispergiermittel für anorganische Bindemittelsuspensionen und -lösungen, für wässrige Kaolin- oder Tonsuspensionen und für Öl-Wasser-Kohle-Suspensionen, als Verdickungsmittel, Retentionsmittel und/oder Verflüssigungsmittel, insbesondere für wässrige Systeme.

2. Verwendung eines Kondensationsproduktes gemäss Anspruch 1, welches als Säuregruppen Carboxy-, Phosphono-, Sulfino-, Sulfo-, Sulfamido-, Sulfoxy-, Sulfoalkyloxy-, Sulfinoalkyloxy- und/oder Phosphonooxygruppen enthalten für den Zweck von Anspruch 1.

3. Verwendung eines Kondensationsproduktes gemäss Anspruch 1 oder 2, bei dem das Molverhältnis Keton/Aldehyde/Säuregruppen einführende Verbindung 1/1 bis 6/0,02 bis 2 ist für den Zweck von Anspruch 1.

**Claims**

1. Use of acid group-containing thermostable, hydrophilic condensation products of
1. aldehydes and
2. symmetrical or asymmetrical ketones with acyclic aliphatic, araliphatic and/or aromatic radicals, whereby, however, at least one radical is a non-aromatic radical,

as dispersion agents for inorganic binding agent suspensions and solutions, for aqueous kaolin or clay suspensions and for oil-water-coal suspensions, as thickening agents, retention agents and/or liquefying agents, especially for aqueous systems.

2. Use of a condensation product according to claim 1 which, as acid groups, contains carboxy, phosphono, sulphino, sulpho, sulphamido, sulphoxy, sulphoalkyloxy, sulphinoalkyloxy and/or phosphonooxy groups for the purpose of claim 1.

3. Use of a condensation product according to claim 1 or 2, in which the mole ratio of ketone/aldehydes/acid group-introducing compounds is 1/1 to 6/0.02 to 2 for the purpose of claim 1.

**Revendications**

1. Utilisation de produits de condensation portant des groupes acides, thermostables, hydrophiles,
1. d'aldéhydes et
2. de cétones symétriques ou asymétriques avec des radicaux acycliques aliphatiques, araliphatiques et/ou aromatiques, au moins un radical étant cependant un radical non aromatique,
comme agents dispersants pour des suspensions et solutions de liants minéraux, pour des suspensions aqueuses de kaolin ou d'argile ou pour des suspensions huile-eau-charbon, comme épaississants, agents de rétention et/ou agents fluidifiants, en particulier pour les systèmes aqueux.

2. Utilisation d'un produit de condensation conforme à la revendication 1, qui contient comme groupes acides des groupes carboxy, phosphono, sulfino, sulfo, sulfamido, sulfoxy, sulfalkyloxy, sulfinalkyloxy et/ou phosphonoxy pour l'application de la revendication 1.

3. Utilisation d'un produit de condensation conforme aux revendications 1 ou 2, dans lequel le rapport molaire cétone/aldéhyde/composé introduisant des groupes acides est de 1/1 à 6/0,02 à 2 pour l'application de la revendication 1.